(19) Europäisches Patentamt

European Patent Office

Office européen des brevets

(11) **EP 1 824 926 B1**

(12) **EUROPEAN PATENT SPECIFICATION**

(45) Date of publication and mention
of the grant of the patent:
**26.08.2009 Bulletin 2009/35**

(51) Int Cl.:
***C08L 23/08*** (2006.01)        ***C08L 43/04*** (2006.01)
***H01B 3/44*** (2006.01)

(21) Application number: **04800327.1**

(22) Date of filing: **16.11.2004**

(86) International application number:
**PCT/SE2004/001664**

(87) International publication number:
**WO 2006/054926 (26.05.2006 Gazette 2006/21)**

(54) **A CROSSLINKABLE POLYETHYLENE COMPOSITION, AN ELECTRIC CABLE COMPRISING IT, AND A PROCESS FOR ITS PREPARATION**

VERNETZBARE POLYETHYLENZUSAMMENSETZUNG, DIESE ENTHALTENDES ELEKTROKABEL UND HERSTELLUNGSVERFAHREN DAFÜR

COMPOSITION A BASE DE POLYETHYLENE RETICULABLE, CABLE ELECTRIQUE COMPORTANT UNE TELLE COMPOSITION, ET SON PROCEDE DE PREPARATION

(84) Designated Contracting States:
**AT BE BG CH CY CZ DE DK EE ES FI FR GB GR HU IE IS IT LI LU MC NL PL PT RO SE SI SK TR**

(43) Date of publication of application:
**29.08.2007 Bulletin 2007/35**

(73) Proprietor: **Borealis Technology Oy**
**06101 Porvoo (FI)**

(72) Inventors:
• **JUNGQVIST, Jonas**
**SE-444 45 Stenungsund (SE)**
• **SULTAN, Bernt-Åke**
**S-444 42 Stenungsund (SE)**
• **JOHANSSON, Kenneth**
**S-444 45 Stenungsund (SE)**

(74) Representative: **Henriksson, Dan Ragnar Mikael**
**Awapatent AB**
**P.O. Box 5117**
**200 71 Malmö (SE)**

(56) References cited:
**EP-A1- 1 256 593**        **EP-A1- 1 512 711**
**WO-A1-03/057747**        **GB-A- 2 019 412**
**US-A- 5 686 546**        **US-A- 5 883 144**
**US-A- 6 048 935**        **US-B1- 6 534 119**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention

The present invention relates to a crosslinkable silane containing polyethylene composition having a silane content of 0.1 to 10 % by weight and at least one silanol condensation catalyst. The invention further relates to an insulated electric cable comprising the composition, and a process for the preparation of the composition.

Background of the invention

It is known to crosslink different polymers by means of additives. Crosslinking improves such properties of the polymer as its mechanical strength and heat resistance. Polymers normally considered to be thermoplastics, and not crosslinkable, can also be crosslinked by introducing crosslinkable groups in the polymer. An example thereof is the crosslinking of polyolefins, such as polyethylene. A silane compound can be introduced as a crosslinkable group, e.g. by grafting the silane compound onto the prepared polyolefin, or by copolymerisation of the olefin and the silane compound. This technique is previously known, and further details may be obtained from US patent specifications 4 413 066, 4 297 310, 4 351 876, 4 397 981, 4 446 283 and 4 456 704.

The crosslinking of polymers with hydrolysable silane groups is carried out by so-called moisture curing. In a first step, the silane groups are hydrolysed under the influence of water, resulting in the splitting-off of alcohol and the formation of silanol groups. In a second step, the silanol groups are crosslinked by a condensation reaction splitting of water. In both steps, a so-called silanol condensation catalyst is used as a catalyst.

Conventional silanol condensation catalysts include carboxylates of metals, such as tin, zinc, iron, lead and cobalt; organic bases; inorganic acids; and organic acids.

As specific examples may be mentioned dibutyl tin dilaurate (DBTDL), dibutyl tin diacetate, dioctyl tin dilaurate, stannous acetate, stannous caprylate, lead naphthenate, zinc caprylate, cobalt naphthenate, ethyl amines, dibutyl amine, hexyl amines, pyridines, inorganic acids, such as sulphuric acid and hydrochloric acid, as well as organic acids, such as toluene sulphonic acid, acetic acid, stearic acid and maleic acid. Particularly the tin carboxylates are often used as catalysts.

Crosslinkable silane containing polyethylene compositions are utilized for various purposes and a specific use is as insulation for electric cables. However, prior art crosslinkable silane containing polyethylene compositions exhibit problems with so-called "frozen layers", i.e. when extruding the polymer on the conductor of the cable the molecules of the polymer composition close to the conductor do not have the possibility to relax when they are brought in contact with the cold conductor and this leads to the formation of a thin layer of highly oriented molecules close to the conductor. This orientation in turn leads to impaired mechanical properties. In particular it is difficult or impossible for the insulation layer to attain a desired tensile strength at break of at least 12.5 MPa and an elongation at break of at least 200 %. Although it is possible to alleviate this problem by preheating the conductor, this requires investment in a preheater which increases the cost. Another solution is to reduce the die pressure by the use of a tube on the die. This solution, however, leads to deterioration of the wetting properties which in turn means reduced adhesion properties between the conductor and the insulation layer.

In view of these disadvantages of the prior art it would be an important technical improvement to achieve a crosslinkable silane containing polyethylene composition which obtains the above mentioned desired mechanical properties without using measures such as a preheater or a tube on the die.

Summary of the invention

It is an object of the present invention to eliminate or at least alleviate the above disadvantages of the prior art and obtain a crosslinkable silane containing polyethylene composition which when crosslinked has a tensile strength at break of at least 12.5 MPa, determined according to ISO 527, and an elongation at break of at least 200 %, determined according to ISO 527.

It is a further object to obtain such a composition which does not need any preheating of the cable conductor or the use of a tube on the die when extruding the composition as insulation around the conductor of an electric cable.

It has been discovered at the present invention that the above objects can be achieved by restricting the long chain branching of the polymer composition. More particularly, the polymer composition should have a long chain branching as defined by the branching parameter g' of 0.65 to 0.85.

It has also been discovered at the present invention that a crosslinkable silane containing polyethylene composition can be obtained by carrying out high pressure polymerisation at a peak temperature of at most 260°C.

Thus, the present invention provides a crosslinkable silane containing polyethylene composition having a silane content of 0.1 to 10 % by weight, and at least one silanol condensation catalyst, characterised in that the composition has a branching parameter (g') value of 0.65 to 0.85 and that said at least one silanol condensation catalyst comprises a sulphonic acid.

The present invention further provides an insulated electric cable, the insulation of which is derived from a crosslinkable silane containing polyethylene composition having a silane content of 0.1 to 10 % by weight, and at least one silanol condensation catalyst, characterised in that the composition has a branching parameter (g') value of 0.65 to 0.85 and that said at least one silanol condensation catalyst comprises a sulphonic acid.

Further still, the present invention provides a process for the preparation of a crosslinkable silane containing polyethylene composition as defined above, characterised in that the process is a high pressure polymerisation process at a peak temperature of at most 260°C.

Further characteristics and advantages of the invention will appear from the appended claims and the following description.

<u>Brief description of the drawings</u>

In the attached drawing

Figure 1 schematically shows a universal calibration graph;
Figure 2 schematically shows a Viscosity Low plot; and
Figure 3 schematically shows a combined graph with Viscosity Low plots for linear and branched polymers as well as a graph for g'

<u>Detailed description of the invention</u>

The crosslinkable polymer composition according to the invention generally concerns a crosslinkable ethylene polymer containing hydrolysable silane groups as indicated earlier, and more precisely it relates to olefin copolymers or graft polymers which contain hydrolysable silane groups and which are crosslinked under the influence of water and at least one silanol condensation catalyst comprising a sulphonic acid. Specifically, the crosslinkable polymer is an ethylene homopolymer or copolymer containing crosslinkable silane groups introduced either by copolymerisation of graft polymerisation.

Regarding graft polymerisation reference is made to US 3 646 155 and 4 117 195.

Preferably, the silane-containing polymer is obtained by copolymerisation of ethylene and an unsaturated silane compound. In the following the invention will therefore be described with particular reference to such copolymerisation of ethylene and an unsaturated silane compound.

The unsaturated silane compound is represented by the formula (I)

$$R_1 SiR'_n Y_{3-n} \qquad (I)$$

wherein
$R_1$ is an ethylenically unsaturated hydrocarbyl,
hydrocarbyloxy or (meth)acryloxy hydrocarbyl group,
R' is an aliphatic saturated hydrocarbyl group,
Y which may be the same or different, is a hydrolysable organic group, and
n is 0, 1 or 2.

If there is more than on Y group, these do not have to be identical.

Specific examples of the unsaturated silane compound are those wherein $R_1$ is vinyl, allyl, isopropenyl, butenyl, cyclohexenyl, or gamma-(meth)acryloxy propyl; Y is methoxy, ethoxy, formyloxy, acetoxy, propionyloxy or an alkyl- or arylamino group; and R', if present, is a methyl, ethyl, propyl, decyl or phenyl group.

A preferred unsaturated silane compound is represented by the formula (II)

$$CH_2 = CHSi(OA)_3 \qquad (II)$$

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-trimethoxysilane, gamma-(meth)acryloxy-triethoxysilane, gamma-(meth)acryloxypropyltrimethoxysilane, gamma-(meth)acryloxypropyltriethoxysilane, and vinyl triacetoxysilane.

The copolymerisation of the ethylene and the unsaturated silane compound is carried out under suitable conditions resulting in the copolymerisation of the two monomers. However, the polymerisation should be carried out under conditions such that the resulting polymer composition has a branching parameter (g') value of 0.65 to 0.85.

The polymer composition according to the invention is preferably a low density polymer made by a high pressure polymerisation process. In addition to the silane component the polymer may contain other comonomers such as alpha-olefine comonomers and acrylate comonomers. Particularly preferred are hydroxy-containing comonomers such as 2-hydroxy ethylmethacrylate (HEMA), which improve the adhesion of the polymer.

The branching parameter, g', is a measure of the amount of long chain branches (LCB). A branching parameter value of g' = 1 means that the polymer composition contains no long chain branches, whereas a branching parameter value of g' < 1 means that the polymer composition contains long chain branches (more LCBs the lower the g' value). Generally, thus, low density polyethylenes prepared by high pressure polymerisation and comprising many LCBs have low g' values, whereas linear high density polyethylenes prepared by low pressure polymerisation and containing no LCBs have a g' value of 1.

By the expression "long chain branch" or "LCB" used herein is meant a branch on the polymer backbone having at least 12 carbon atoms.

The branching parameter g' is determined by gel permeation chromatography (GPC) and calculation from the equation:

$$g' = [\eta]_{branched}/[\eta]_{linear,}$$

where [n]branched is the intrinsic viscosity of the branched polymer in question and [η] linear is the intrinsic viscosity of an linear (unbranched) standard polymer.

The procedure for determining the branching parameter g' will be described more extensively below in connection with the examples.

At the present invention it has been discovered that when preparing a crosslinkable silane containing polyethylene composition by high pressure copolymerisation the required g' value of 0.65 to 0.85 is obtained by controlling the polymerisation temperature. More particularly, the maximum temperature or peak temperature in the polymerisation reactor should be at most 260°C. A peak temperature above 260°C gives too much long chain branching and a g' value below 0.65. Preferably, the peak polymerisation temperature lies in the range 250-260°C. The polymerisation temperature should not be below 180°C as the polymerisation reaction then ceases or proceeds at a very low rate.

As mentioned above the g' value at the present invention is 0.65 to 0.85. The theoretical upper limit of the g' value is g' = 1 (no long chain branches), but this value is very difficult, if not impossible to achieve in practice, because if the polymerisation temperature is lowered too much the polymerisation reaction becomes very slow or ceases. In practice the g' value lies in the range from 0.65 to 0.85.

The pressure of the polymerisation reaction does not seem to have any significant effect on the g' value of the polymer composition. Generally, the pressure of the polymerisation reaction is at least 120 MPa, preferably 230-260 MPa or higher.

As mentioned earlier, the crosslinkable silane containing polyethylene composition of the invention has a silane content of 0.1 to 10 % by weight, based on the composition. Preferably the silane compound constitutes 0.1 to 5 % by weight, and more preferably 0.1 to 3 % by weight, based on the composition.

As mentioned earlier, the crosslinkable silane containing polyethylene composition of the invention comprises at least one silanol condensation catalyst. The silanol condensation catalyst may be any one of the conventional silanol condensation.catalysts described earlier herein, or a mixture thereof. Preferably, however, the silanol condensation catalyst is a sulphonic acid such as a compound of the general formula (III)

$$ArSO_3H \qquad (III)$$

or a hydrolysable precursor thereof, Ar being a substituted aryl group, and the compound containing 14-28 carbon atoms in total. Preferably, Ar is an alkylsubstituted benzene or naphthalene ring with the alkyl substituent containing 8-20 carbon atoms in the benzene case and 4-18 carbon atoms in the naphthalene case. Preferably the catalyst of formula (III) is dodecyl benzene sulphonic acid or tetrapropyl benzene sulphonic acid. For more details regarding the catalyst of formula (III) reference is made to WO 95/17463.

The amount of silanol condensation catalyst present in the crosslinkable silane containing polyethylene composition generally is in the order of 0.0001-3 % by weight, preferably 0.001-2 % by weight, and most preferably 0.005-1 % by weight, based on the amount of silanol-group containing polymers in the composition.

As is usually the case for polymer compositions, the crosslinkable silane containing polyethylene composition may contain various additives, such as antioxidants, stabilisers, lubricants, fillers, and colouring agents.

Having thus described the present invention it will now be further illustrated by way of some non-limiting examples and comparative examples.

The following procedure was used in the examples to determine g'. This procedure should be followed when determining the branching parameter g' in accordance with the present invention.

Gel Permeation Chromatography is used for determination of molecular weight (M), molecular distribution (Mw/Mn), intrinsic viscosity [η] and contents of long chain branching (LCB/g').

Gel Permeation Chromatography (GPC), which is also known as Size Exclusion Chromatography (SEC),is an analytical technique where the molecules are separated after their size. Large molecules elutes first and the smaller ones later.

Molecules elute after decreasing hydrodynamic volume $V_h$. This can be described as a product of the molecules molecular weight (M) and its intrinsic viscosity [η] .

The principe of universal calibration in GPC states that for given sets of solvent and temperature conditions in which a polymer sample is separated by pure size mechanism (no adsorption or other effects), the logarithm of the hydrodynamic volume of a polymer molecule as a function of its elution volume (or time) is identical for all polymers, linear or branched. See the equation:

$$V_h = [η]xM \ or \ logV_h = log([η]xM)$$

The hydrodynamic volume is defined as a product of intrinsic viscosity [η] and molecular weight M.

Universal calibration is independent of the polymer type and possible branched polymers.

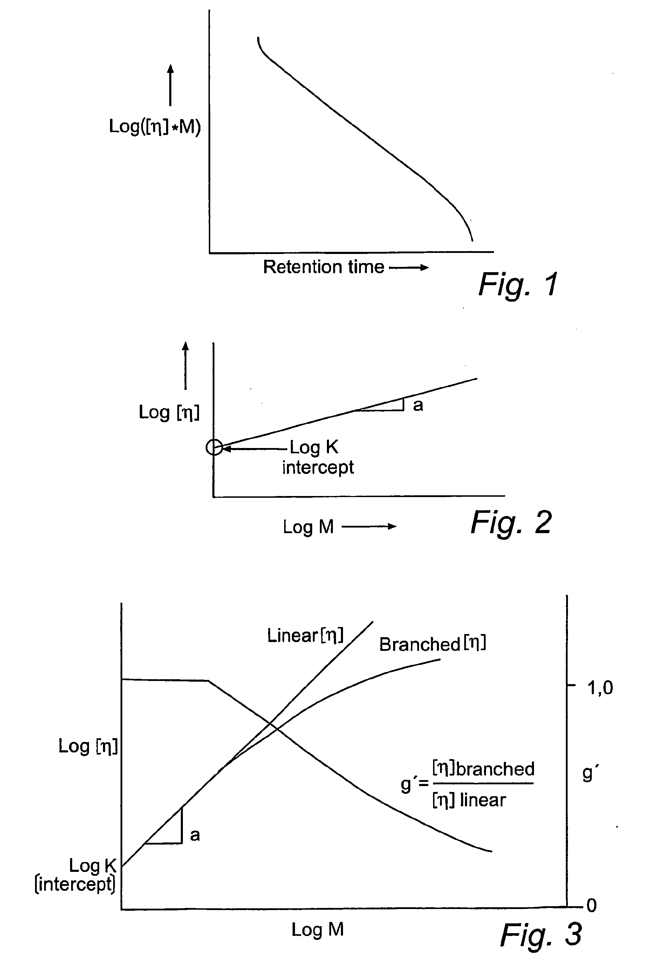

A serial of small standard is used to find the relation between retention time and molecular weight. A plot of log $V_h$ against retention time gives a universal calibration graph as schematically shown in Figure 1.

Mark-Houwink-Sakurade equation relates a polymer intrinsic viscosity to its viscosity average molecular weight $M_v$.

$$[η] = K \ x \ M^a_v$$

[η is the intrinsic viscosity.

$M_v$ is the viscosity average molecular weight.

K and a are Mark-Houwink constants. These constants are dependent of the polymer type, solution and the temperature.

By taking the logarithm on both sides of the equation we will get:

$$log[η] = logK + a \ x \ logM_v$$

A plot of log[η] verses log [$M_v$] (narrow standards) gives slope and the intercept K. This is the Viscosity Low plot as schematically shown in Figure 2.

If K and a are known for both standards and samples, the molecular weights can be decided by mean of the relation to their respective constants.

GPC uses a Universal Calibration for quantitative evaluation of the molecular weight distribution.

The calibration is based on narrow standards to calculate a universal calibration curve. The retention time for each standard (the RI peak) is calculated. These values, together with the appurtenant molecular weight are used to make a universal calibration curve.

The software is able to produce a plot of Log Viscosity versus Log Molecular Weight for both the RI-and the viscosity-detector. Each detector produces a universal calibration for each fraction within the polymer chromatogram.

A universal calibration gives genuine molecular weight results.

The software can decide K and a for the standards.

The following values are recommended to be used.

| PS: K = | $9,54*10^{-5}$ | a = | 0,725 |
|---|---|---|---|
| PE: K = | $3,92*10^{-4}$ | a = | 0,725 |

The equipment used was a Waters 150CVplus Gel Permeation Chromatograph no. W-4412 (cf. Waters 150CVplus Viscometer Supplement)having a differential Refractive Index (dRI) detector and a single capillary viscometer detector, and three HT6E Styragel (porous styrenedivinylbenzene) columns from Waters. Calibration was made with narrow molecular weight distribution polystyrene standards with different molecular weights (all16_05002). The mobile phase was 1,2,4-trichlorobenzene (purity 98.5 %) with 0.25 g/l BHT, 2-tert-butyl-4-methylphenol added as an antioxidant. Millennium[32] Version 4 software from Waters was used for calculation of g' (LCB).

Viscosity Low Plots are determined for the polystyrene standards which have no long chain branching and therefore represent linear (unbranched) polymers, and for the branched polyethylene composition of the invention. The branching parameter is thereafter calculated from the equation:

$$g' = [\eta]_{branched}/[\eta]_{linear},$$

where [η] branched is the intrinsic viscosity of the branched polymer in question and [η] linear is the intrinsic viscosity of an linear (unbranched) standard polymer.

The above is illustrated in Figure 3 which shows a combined graph with Viscosity Low Plots for linear, and branched polymers as well as a graph for g'.

In the examples the mechanical properties were tested on cable samples. The tested cable samples were manufactured in the following way: Cables consisting of an 8 mm² compact aluminium conductor and an insulation thickness of 0.7 mm were produced in a Nokia-Mailefer 60 mm extruder at a line speed of 75 m/min.

Die: Pressure (wire guide 3.1 mm, die 4.4 mm).

Conductor temperature: 20°C (non-preheated conductor).

Cooling bath temperature: 23°C.

Screws:Elise.

Temperature profile:170-180-190-190-190-190-190-190°C .

5% of a silanol condensation catalyst master batch (CMB-1) was dry blended into the polymers prior to extrusion. CMB-1 consists of 1.7% dodecyl benzene sulphonic acid crosslinking catalyst, drying agent (HDTMS, hexadodecyl trimethoxysilane) and antioxidant (butylated reaction product of p-cresol and dicyclopentadiene) mixed into an ethylene-butyl acrylate copolymer. Butyl acrylate content: 17 % by weight, $MFR_{2.16}$ = 4.5 g/10 min.

Examples 1-2 and Comparative examples 1-4

Tests regarding the tensile strength at break according to ISO 527 and the elongation at break according to ISO 527 were performed on cables with cable insulations produced from different polymer compositions. The particulars of the polymer compositions of the examples were as follows:

Example 1

Polymer A: High pressure produced ethylene-vinyl trimethoxysilane (VTMS) copolymer having a g' = 0.68, $MFR_{2.16}$ = 1.0 g/10 min and a VTMS content of 1.3 % by weight. Produced in a tubular reactor at 250 MPa and 255°C .

Example 2

Polymer B: High pressure produced ethylene-vinyl trimethoxysilane copolymer having a g' = 0.73, $MFR_{2.16}$= 1.8 g/10 min and a VTMS content of 1.8 % by weight. Produced in a tubular reactor at 255 MPa and 252°C.

Comparative example 1

Polymer C: High pressure produced ethylene-vinyltrimethoxysilane copolymer having a g' = 0.45, $MFR_{2.16}$= 0.9 g/10 min and a VTMS content of 1.3 % by weight. Produced in a tubular reactor at 230 MPa and 310°C.

Comparative example 2

Polymer D: High pressure produced ethylene-vinyltrimethoxysilane copolymer having a g' = 0.58, $MFR_{2.16}$ = 1.2 g/10 min and a VTMS content of 1.3 weight%. Produced in a tubular reactor at 260 MPa and 275°C.

Comparative example 3

Polymer E: High pressure produced ethylene-vinyl trimethoxysilane copolymer having a g' = 0.60, $MFR_{2.16}$ = 2.8 g/10 min and a VTMS content of 1.3 % by weight. Produced in a tubular reactor at 260 MPa and at a maximum temperature of 275°C.

Comparative example 4

Polymer F: High pressure produced ethylene-vinyl trimethoxysilane copolymer having a g' = 0.62, $MFR_{2.16}$ = 1.0 g/10 min and a VTMS content of 1.3 % by weight. Produced in a tubular reactor at 240 MPa and at a maximum temperature of 280°C.

The results are shown in Table 1.

Table 1

| Example | g' | Tensile strength (MPa) | Elongation (%) |
|---|---|---|---|
| Example 1 | 0.68 | 15.2 | 250 |
| Example 2 | 0.73 | 15.0 | 245 |
| Comp. Ex. 1 | 0.45 | 12.7 | 174 |
| Comp. Ex. 2 | 0.58 | 12.9 | 190 |
| Comp. Ex. 3 | 0.60 | 12.6 | 174 |
| Comp. Ex. 4 | 0.62 | 14.6 | 164 |

It is evident from table 1 that by providing compositions having a g' of 0.65 to 0.85 in accordance with the present invention it is possible to obtain an insulation for an electrical cable that fulfils the mechanical requirements according to e.g. VDE 0276-603 ("Verband Deutscher Elektrotechniker") of a tensile strength at break of at least 12.5 MPa together with an elongation at break of at least 200 % without any need of preheating the conductor or using a tube on the die.

**Claims**

1. A crosslinkable silane containing polyethylene composition having a silane content of 0.1 to 10 % by weight, and at least one silanol condensation catalyst, **characterised in that** the composition has a branching parameter (g') value of 0.65-0.85 and that said at least one silanol condensation catalyst comprises a sulphonic acid.

2. A composition according claim 1, wherein the elongation at break is at least 200% determined according to ISO 527.

3. A composition according to claim 1 or 2, wherein the tensile strength at break is at least 12.5 MPa determined according to ISO 527.

4. A composition according to any one of claims 1-3, wherein the silane containing polyethylene composition is an ethylene-silane copolymer resin.

5. A composition according to claim 4, wherein the ethylene-silane copolymer resin is an ethylene-vinyltrimethoxysilane copolymer, an ethylene-bismethoxyethoxysilane copolymer, an ethylene-vinyltriethoxysilane copolymer, an ethylene-gamma-trimethoxysilane copolymer, an ethylene-gamma-(meth)acryloxytriethoxysilane copolymer, an ethylene-gamma-(meth)acryloxypropyltrimethoxysilane copolymer, an ethylene-gamma-(meth)acryloxypropyltriethoxysilane copolymer, or an ethylene-triacetoxysilane copolymer resin.

6. A composition according to claim 1-5, wherein the silanol condensation catalyst comprises a compound of formula (III):

$$ArSO_3H \qquad (III)$$

or a hydrolysable precursor thereof, Ar being a substituted aryl group, and the compound containing 14-28 carbon atoms in total.

**7.** An insulated electric cable, the insulation of which is derived from a crosslinkable silane containing polyethylene composition having a silane content of 0.1 to 10 % by weight, and at least one silanol condensation catalyst, **characterised in that** the composition has a branching parameter (g') value of 0.65-0.85 and that said at least one silanol condensation catalyst comprises a sulphonic acid.

**8.** A process for the preparation of a crosslinkable silane containing polyethylene composition according to any of claims 1-6, **characterised in that** the process is a high pressure polymerisation process at a peak temperature of at most 260°C.

**Patentansprüche**

**1.** Vernetzbare, Silan enthaltende Polyethylenzusammensetzung, die einen Silangehalt von 0,1 bis 10 Gew.-% und zumindest einen Silanolkondensationskatalysator aufweist,
**dadurch gekennzeichnet, daß** die Zusammensetzung einen Wert für den Verzweigungsparameter (g') von 0,65 bis 0,85 hat und der zumindest eine Silanolkondensationskatalysator eine Sulfonsäure umfaßt.

**2.** Zusammensetzung nach Anspruch 1, wobei die Reißdehnung mindestens 200 % beträgt, und zwar gemäß ISO 527 gemessen.

**3.** Zusammensetzung nach Anspruch 1 oder 2, wobei die Reißfestigkeit mindestens 12,5 MPa beträgt, und zwar gemäß ISO 527 gemessen.

**4.** Zusammensetzung nach einem der Ansprüche 1 bis 3, wobei die Silan enthaltende Polyethylenzusammensetzung ein Harz aus einem Ethylen-Silan-Copolymer ist.

**5.** Zusammensetzung nach Anspruch 4, wobei das Harz aus dem Ethylen-Silan-Copolymer ein Ethylen-Vinyltrimethoxysilan-Copolymer, ein Ethylen-Bismethoxyethoxysilan-Copolymer, ein Ethylen-Vinyltriethoxysilan-Copolymer, ein Ethylen-$\gamma$-Trimethoxysilan-Copolymer, ein Ethylen-$\gamma$-(Meth)acryloxytriethoxysilan-Copolymer, ein Ethylen-$\gamma$-(Meth)acryloxypropyltrimethoxysilan-Copolymer, ein Ethylen-$\gamma$-(Meth)acryloxypropyltriethoxysilan-Copolymer oder ein Harz aus einem Ethylen-Triacetoxysilan-Copolymer ist.

**6.** Zusammensetzung nach den Ansprüchen 1 bis 5, wobei der Silanolkondensationskatalysator eine Verbindung der Formel (III):

$$ArSO_3H \qquad (III)$$

oder eine hydrolysierbare Vorläuferverbindung davon umfaßt, wobei Ar ein substituierter Arylrest ist und die Verbindung insgesamt 14 bis 28 Kohlenstoffatome enthält.

**7.** Isoliertes Elektrokabel, dessen Isolation von einer vernetzbaren, Silan enthaltenden Polyethylenzusammensetzung stammt, die einen Silangehalt von 0,1 bis 10 Gew.-% und zumindest einen Silanolkondensationskatalysator aufweist, **dadurch gekennzeichnet, daß** die Zusammensetzung einen Wert für den Verzweigungsparameter (g') von 0,65 bis 0,85 hat und der zumindest eine Silanolkondensationskatalysator eine Sulfonsäure umfaßt.

**8.** Verfahren zum Herstellen einer vernetzbaren, Silan enthaltenden Polyethylenzusammensetzung nach einem der Ansprüche 1 bis 6,
**dadurch gekennzeichnet, daß** das Verfahren ein Hochdruckpolymerisationsverfahren bei einer Höchsttemperatur von maximal 260°C ist.

**Revendications**

**1.** Composition de polyéthylène contenant du silane réticulable ayant une teneur en silane de 0,1 à 10 % en poids, et au moins un catalyste de condensation de silanol, **caractérisée en ce que** la composition a une valeur de paramètre de ramification (g') de 0,65 - 0,85 et que ledit au moins un catalyste de condensation de silanol comprend un acide sulfonique.

2. Composition selon la revendication 1, dans laquelle l'élongation à la rupture est déterminée au moins à 200 % selon ISO 527.

3. Composition selon la revendication 1 ou la revendication 2, dans laquelle la résistance à la traction à la rupture est déterminée au moins à 12,5 MPa selon ISO 527.

4. Composition selon l'une quelconque des revendications 1 à 3, dans laquelle la composition de polyéthylène contenant du silane est une résine de copolymère éthylène - silane.

5. Composition selon la revendication 4, dans laquelle la résine de copolymère éthylène - silane est un copolymère éthylène - vinyltriméthoxysilane, un copolymère éthylène - bisméthoxyéthoxysilane, un copolymère éthylène - vinyltriéthoxysilane, un copolymère éthylène - gamma - triméthoxcysilane, un copolymère éthylène - gamma - (meth) acryloxytriéthoxysilane, un copolymère éthylène - gamma - (meth)acryloxypropyltriméthoxysilane, un copolymère éthylène - gamma - (meth)acryloxypropyltriéthoxysilane, ou une résine de copolymère éthylène - triacétoxysilane.

6. Composition selon les revendications 1 à 5, dans laquelle le catalyste de condensation de silanol comprend un composé de formule (III) :

$$ArSO_3H \qquad (III)$$

ou un précurseur hydrolysable de celui-ci, Ar étant un groupe aryle substitué, et le composé contenant de 14 à 28 atomes de carbone au total.

7. Câble électrique isolé, dont l'isolation est dérivée d'une composition de polyéthylène contenant du silane réticulable ayant une teneur en silane de 0,1 à 10 % en poids, et au moins un catalyste de condensation de silanol, **caractérisé en ce que** la composition a une valeur de paramètre de ramification (g') de 0,65 - 0,85 et que ledit au moins un catalyste de condensation de silanol comprend un acide sulfonique.

8. Processus pour la préparation d'une composition de polyéthylène contenant du silane réticulable selon l'une quelconque des revendications 1 à 6, **caractérisé en ce que** le processus est un processus de polymérisation à haute pression à une température de pointe au plus de 260° C.

*Fig. 1*

*Fig. 2*

$$g' = \frac{[\eta]\text{branched}}{[\eta]\,\text{linear}}$$

*Fig. 3*

**REFERENCES CITED IN THE DESCRIPTION**

**Patent documents cited in the description**

- US 4413066 A
- US 4297310 A
- US 4351876 A
- US 4397981 A
- US 4446283 A
- US 4456704 A
- US 3646155 A
- US 4117195 A
- WO 9517463 A